# EUROPEAN PATENT SPECIFICATION

(11) **EP 4 370 343 B1**
(45) Date of publication and mention of the grant of the patent: **19.08.2026**
(21) Application number: 21956941.5
(22) Date of filing: 09.09.2021
(51) Int. Cl.: B41J 2/14, B41J 2/16, C08G 59/18, B29C 70/88, B82Y 30/00, C08G 59/24, C08G 59/68, C08K 3/04, C08K 3/36

(54) **CONDUCTIVE COMPOUNDS TO ENCAPSULATE FLUIDIC DIES**
LEITFÄHIGE VERBINDUNGEN ZUR VERKAPSELUNG VON FLUIDISCHEN MATRIZEN
COMPOSÉS CONDUCTEURS CONÇUS POUR ENCAPSULER DES PUCES FLUIDIQUES

(43) Date of publication of application: 22.05.2024
(73) Proprietor: Hewlett-Packard Development Company, L.P., Spring TX 77389 (US)
(72) Inventor: SONG, Bo, Corvallis, Oregon 97330-4241 (US); ZHANG, Zhuqing, Corvallis, Oregon 97330-4241 (US)
(74) Representative: Plasseraud IP
(86) International application number: PCT/US2021/049622
(87) International publication number: WO 2023/038625

(56) References cited:
- WO-A1-2016/145661
- WO-A1-2017/205572
- CN-A- 103 421 279
- CN-A- 103 450 632
- CN-A- 107 353 597
- KR-B1- 101 380 340
- US-A- 5 798 400
- US-A1- 2013 153 834
- US-A1- 2016 001 558
- US-B1- 10 022 962
- US-B2- 11 020 967

## Description

### BACKGROUND

Printing devices use fluid ejection devices to dispense printing fluids onto substrates. The fluid ejection devices can be electrically controlled to eject desired amounts of printing fluid onto desired locations of the substrate to print images or text. A typical fluid ejection device includes a fluidic die that is placed on a headland unit to form a printhead. The printhead may then be attached to a body or reservoir of printing fluid of the fluid ejection device.

The fluidic die may include silicon slivers where openings are formed, which allow the printing fluid to be ejected through the openings. The silicon slivers may include bond pads which can be electrically connected to the electrical portion of the printhead. Electrical connections can be formed on the silicon slivers to an electrical circuit of the printhead to provide electrical control of dispensing the printing fluid through the openings in the silicon slivers. CN103450632A describes an epoxy resin composition for electronic packaging and preparation method thereof. CN107353597A describes a plastic packaging material and IGBT packaging device. US5798400A describes an epoxy resin compound. CN103421279A describes an epoxy resin composition used for electronic packaging and preparation method thereof. US2013/153834A1 describes a liquid composition, resistor film, resistor element and circuit board. US11020967B2 describes a printhead including a number of inkjet slivers molded into a moldable substrate. US2016/001558A1 describes a molded printhead.

### SUMMARY

The scope of the invention is defined by the appended claims.

### BRIEF DESCRIPTION OF THE DRAWINGS

FIG. 1 is a representative image of an example fluidic ejection device that includes a fluidic die that is overmolded with a conductive grade epoxy molding compound (EMC) of the present disclosure;
FIG. 2 is a top view of an example fluidic die that is overmolded with the conductive grade EMC of the present disclosure;
FIG. 3 is a cross-sectional view of the example fluidic die that is over molded with the conductive grade EMC of the present disclosure;
FIG. 4 is a flow chart of an example method to prepare the conductive grade EMC of the present disclosure; and
FIG. 5 is a flow chart of an example method to fabricate the fluidic die that is over molded with the conductive grade EMC of the present disclosure.

### DETAILED DESCRIPTION

Examples described herein provide a conductive compound to encapsulate fluidic dies. As discussed above, a fluid ejection device may include a fluidic die that comprises a silicon device that can be encapsulated. The silicon device used to be formed on a larger silicon substrate. Portions of the silicon substrate can be replaced with an epoxy molding compound (EMC) to reduce costs by reducing the amount of silicon used to form the fluidic die.

However, EMC has a much higher resistivity than silicon. As a result, electrostatic discharges (ESDs) that strike the fluidic die would travel towards the electrical components of the fluidic die rather than dissipating through the conductive silicon substrate. The ESDs can cause failure of the fluidic die. Furthermore, the ESD failures can be accelerated by high power/voltage signals and eventually lead to cascading of resistor corrosions.

Previous solutions attempted to resolve the issue by creating an enhanced circuit layout to increase a path of the circuit lines. For example, the circuit lines would be laid in a serpentine path to try and buy more time before the cascading failures occur. This delays, but does not prevent, the cascading failures.

Another previous solution was to add a tantalum grounding shield. However, this solution adds an extra mask layer for the process. In addition, the tantalum grounding shield uses a different system architecture that affects the electronic design and writing system of the fluidic die.

The present disclosure provides a conductive grade EMC that can be used to prevent ESD strikes from dissipating towards the fluidic die, and thus, preventing cascading failures. In an example, the conductive grade EMC of the present disclosure adds a conductive component to the EMC to reduce the resistivity of the EMC. For example, currently used commercial EMCs can have a resistivity above 1 x 10¹² ohm centimeters (Ω·cm) at 150 degrees Celsius (°C) and above 1 x 10¹⁶ Ω·cm at room temperature, which can be 14 orders of magnitude higher than the resistivity of the previously used doped silicon substrates. The EMCs of the present disclosure can reduce the resistivity to as low as 6.5 x 10⁴ Ω·cm at 2 weight percent (wt%) filler loading and with a low percolation threshold to maintain the viscosity of the EMC for moldability and flow uniformity.

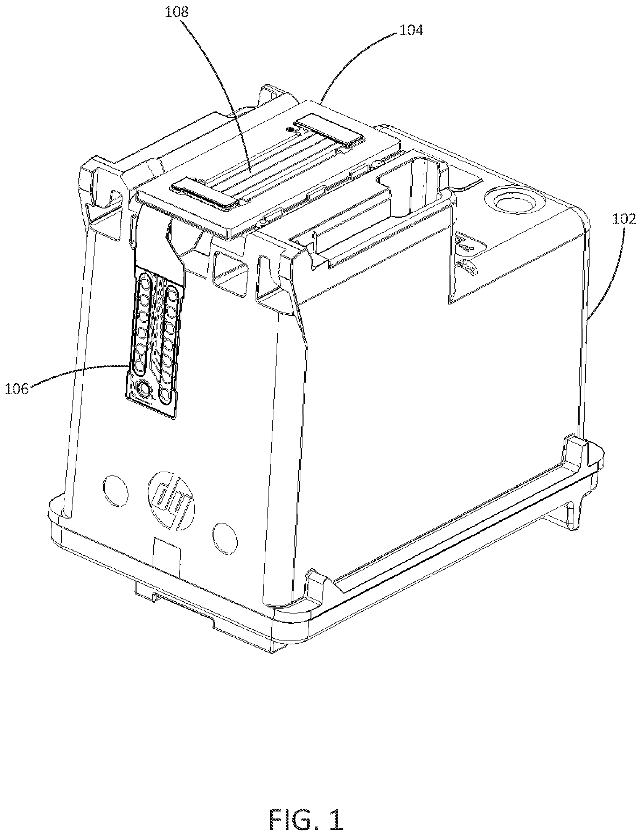

FIG. 1 illustrates an example fluid ejection device 100 that includes a fluidic die 108 that is overmolded with a conductive grade epoxy molding compound (EMC) of the present disclosure. The fluid ejection device 100 may be inserted into a printing or imaging device (not shown) to print images onto a substrate. The printing device may be an inkjet printer.

The fluid ejection device 100 may be electrically controlled by a processor of the printing device to eject printing fluid through nozzles located on the fluidic die 108. The processor may control the fluid ejection device 100 to dispense a desired amount of printing fluid onto desired locations of a substrate to print the image.

The fluid ejection device 100 may include reservoirs of a printing fluid, such as ink, inside of a reservoir body 102 of the fluidic ejection device 100. The reservoir body 102 is to store printing fluid. For example, the reservoir body 102 may include several different reservoirs that can store different colored printing fluids (e.g., cyan, yellow, magenta, and black) for a color printing device. In another example, the reservoir body 102 may include a single reservoir to store a single color printing fluid (e.g., black) for a black and white printing device.

In an example, a printhead 104 is coupled to the reservoir body 102 of the fluid ejection device 100. The printhead 104 may also be referred to as an integrated headland unit that includes electrical pads 106. The electrical pads 106 may establish electrical connections to corresponding electrical pads on a movable cartridge of the printing device. The processor of the printing device may transmit electrical signals to the fluidic die 108 via the electrical pads 106 to control ejection of the printing fluid. For example, the electrical signals may control opening of nozzles in the fluidic die 108 or localized heating of printing fluid to eject printing fluid (e.g., in the case of a thermal inkjet (TIJ) resistor).

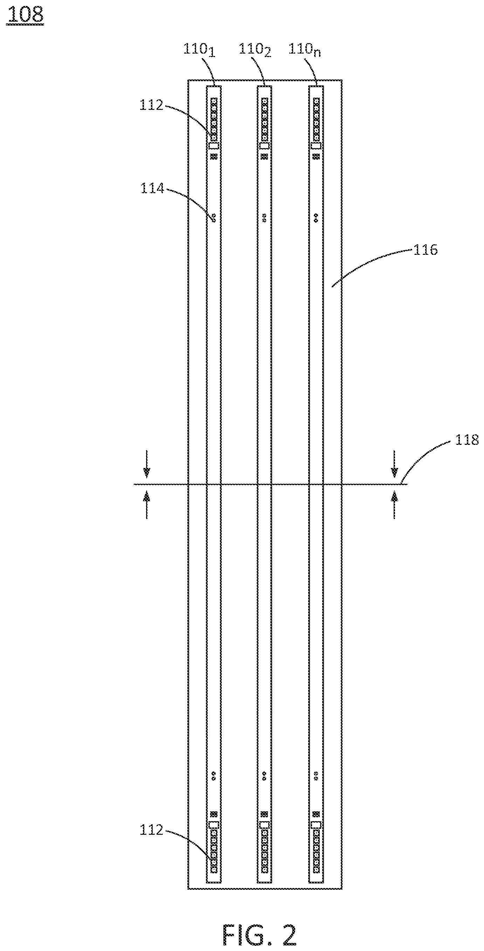

FIG. 2 illustrates a more detailed top view of the fluidic die 108 of the present disclosure. The fluidic die 108 includes silicon slivers 110₁ to 110ₙ (hereinafter also referred to individually as a silicon sliver 110 or collectively as silicon slivers 110). Although three silicon slivers 110 are illustrated in FIG. 2, it should be noted that any number of silicon slivers 110 may be deployed on fluidic die 108.

The silicon slivers are over molded with a conductive grade EMC 116. In an example, each one of the silicon slivers 110 may include at least one nozzle 114 to eject printing fluid. Each one of the silicon slivers 110 may also include bond pads 112 to establish an electrical connection and allow the nozzles 114 to be electrically controlled.

For example, the ejection of the printing fluid may be controlled via a TIJ resistor. An electrical signal may be sent to the TIJ resistor to heat the resistor. The TIJ resistor may generate localized heat to cause bubbles in the printing fluid. The force of the bubbles can cause small volumes of the printing fluid to be ejected via the nozzles 114.

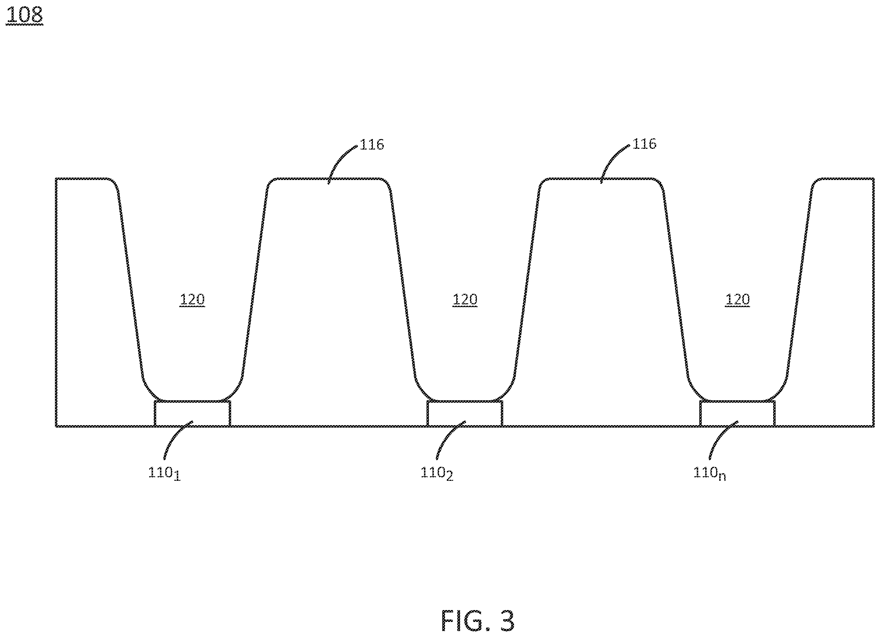

FIG. 3 illustrates a cross-sectional view of the fluidic die 108 across line 118 illustrated in FIG. 2. In an example, the fluidic die 108 may be formed by over molding the conductive grade EMC 116 over the silicon slivers 110. The conductive grade EMC 116 can be molded to include open volumes or trenches 120. The printing fluid may be dispensed from the reservoirs in the reservoir body 102 of the fluid ejection device 100 towards the open volumes 120. The printing fluid may then flow towards the nozzles 114 of the silicon slivers 110.

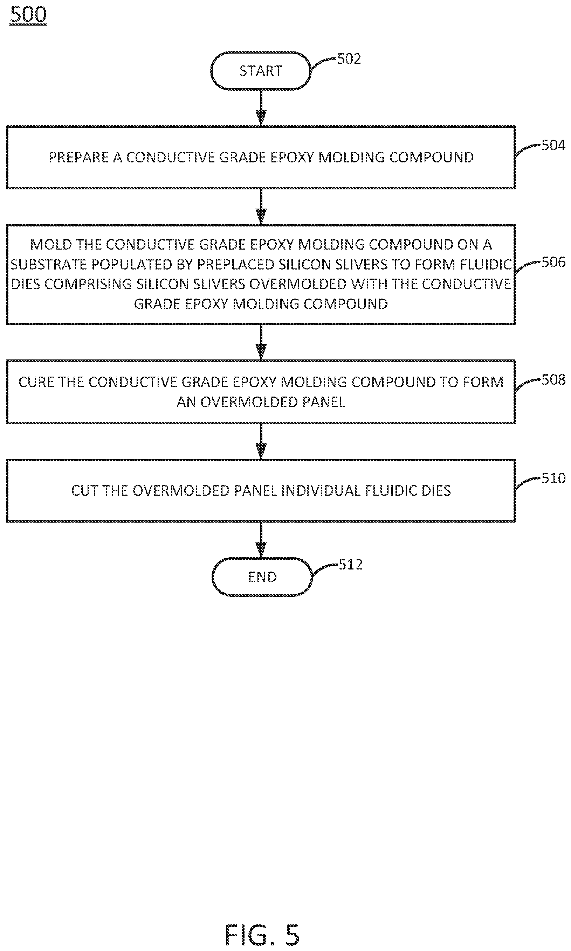

The conductive grade EMC 116 may be molded using various techniques, such as compression molding, transfer molding, slot molding, and the like. Details of the molding processes are discussed in further detail below with respect to a method 500 illustrated in FIG. 5.

As discussed above, previous fluidic dies 108 included a non-conductive EMC to replace portions of silicon on the fluidic die. The non-conductive EMC replaced much of the silicon on the silicon substrate and reduced costs of manufacturing the fluidic die. However, the previously used non-conductive EMC formulations had high resistivity. As a result, electrostatic discharges (ESDs) that struck the fluidic die would cause the ESD to travel towards the silicon slivers. Overtime the ESDs could cause failure of the fluidic die.

In an example, the ESDs may be generated from static electricity discharged from a user when the user touches the fluidic die when inserting the fluid ejection device 100 into a printing device. In another example, the ESDs may be generated from strikes from other silicon devices. In an automated manufacturing line, loading, unloading, and handling system on tools can also be another source of ESDs.

As noted above, the present disclosure provides a conductive grade EMC 116 that reduces the resistivity of the EMC compared to previously used EMCs. For example, the conductive grade EMC 116 of the present disclosure may have a resistivity as low as 6.5 x 10⁴ Ω·cm (compared to resistivity higher than 1 x 10¹² Ω·cm for previously used EMCs) at 2 weight percent (wt%) filler loading and with a low percolation threshold to maintain the viscosity of the conductive grade EMC 116 for moldability and flow uniformity.

The percolation threshold predicates the relationship between the resistivity of composites and the volume of conductive elements. When the conducting filler content increases, the composite undergoes an insulator to conductor transition. The filler content may be referred to as the percolation threshold, in which the resistivity drops dramatically by several orders of magnitude due to the formation of electrically conductive networks. In an example, the percolation threshold may be less than or equal to 5 wt%.

The conductive grade EMC 116 may be formulated initially as a liquid to have a relatively high pot life (e.g., up to 24 hours) and a low viscosity (e.g., less than 220 Pascal-seconds (Pa·s)). The liquid form of the conductive grade EMC 116 may then be processed into various shaped solids (e.g., granular, powder, tablets, and the like) to accommodate the different types of over molding processes that can be used to fabricate the fluidic die 108.

In an example, the conductive grade EMC 116 may be formulated by mixing a conductive additive into the epoxy resin compound. In an example, the conductive additive may be a carbon based additive. Carbon based additives may be lightweight, chemically inert, mechanically robust, and compatible with the epoxy resin. The carbon based additives can be in micro or nano forms, including particles, spheres, sheets, platelets, nanotubes, nanofibers, crosslinked structures, and the like. The epoxy resin may be any type of epoxy resin, such as multifunctional type, biphenyl type, di-cyclo pentadiene type, ortho cresol novolak type, multi-aromatic type, and the like.

In an example, the conductive additive may be added in desired amounts to tune the resistivity of the conductive grade EMC 116. For example, the resistivity of the conductive grade EMC 116 may be between 1 x 10¹² Ω·cm to 1 x 10¹ Ω·cm measured at room temperature. In an example, the resistivity of the conductive grade EMC 116 may be tuned to be from 6.5 x 10⁴ Ω·cm to 1 x 10¹⁰ Ω·cm at a low percolation threshold (e.g., less than 5 wt% of the conductive additive) at room temperature. The thermal expansion coefficient of the conductive EMC 116 may be kept below 15 parts per million per degree Celsius (ppm/°C) to ensure low warpage. The spiral flow distance, gel time, and viscosity of the conductive grade EMC 116 may be optimized to prevent void formation and minimize flow marks.

Examples of carbon based additives may include, but are not limited to, carbon black, graphite, graphene, nanoplatelets, carbon nanotubes, carbon nanofibers, carbon spheres, and carbon nanostructures. Carbon black may have primary carbon particles with a high degree of aggregation. The content and size distribution of carbon black may be controlled to maintain the viscosity of the conductive EMC for moldability and flow uniformity.

Carbon nanotubes may be composed of 90-93% carbon. The carbon nanotubes may include entangled bundles of nanotubes. Carbon nanotubes may have a very low resistivity of 1 x 10⁴ Ω·cm, but may be more difficult to dispense and handle.

Carbon nanostructures may be a high purity carbon additive that includes high purity (e.g., more than 95% of carbon with minimal quantities of oxygen). The crosslinked carbon nanotube structures can form a robust network at much lower loadings than a single wall or multi-wall carbon nanotubes. The carbon nanostructures can achieve a desired percolation threshold below 1 wt% in the epoxy resin compound due to the excellent dispersion quality of the carbon nanostructures.

In an example, the amount of the conductive additive that is included in the conductive grade EMC 116 may be based on the type of conductive additive that is used, content of the overall compound, particle size of the conductive additive, purity of the conductive additive, geometry of the conductive additive, and aspect ratio of the conductive additive. In an example, the conductive additive may be added in an amount that is 0.1 to 5 weight percent (wt%) of the epoxy resin compound.

Other additives may also be included to control physical properties of the conductive grade EMC 116. For example, the conductive grade EMC 116 may include a hardener, an inorganic filler, and a catalyst. For example, the hardener may be used to cure the epoxy resin compound. The hardener may include a multifunctional type, a biphenyl type, a phenol novolac type, di-cyclo pentadiene type, or similar compounds.

The inorganic based filler may define the physical properties of the conductive grade EMC 116. For example, the inorganic based filler may define properties such as the modulus, thermal conductivity, and the like. Examples of the inorganic based filler may include fused silica, alumina, a silica/alumina mixture, aluminum nitride, and the like. The inorganic based filler may be added to an amount of greater than 80 wt% of the epoxy resin compound.

The catalyst may be added to accelerate curing of the epoxy resin compound. Example catalysts that can be used may include imidazole, phosphorous, amine, and other similar compounds.

In an example, other additives may be added to the conductive grade EMC 116. For example, other additives such as a modifier (e.g., an adhesion promoter, a silane coupling agent, a plasticizer, a low stress additive, and the like), a coloring agent, a flame retardant, releasing agent (e.g., a releasing mold compound, a natural or synthetic wax, and the like), ion catcher, and the like may be added.

The epoxy resin, the conductive additive, the inorganic based filler, and other materials may be mixed together in desired amounts. The mixture may be heated and processed into the desired form for over molding the silicon slivers 110.

A few example formulations of the conductive grade EMC 116 are provided below.

### EXAMPLE 1:

The epoxy resin comprises a multifunctional resin and a multifunctional hardener. A fused silica filler is used to 85 wt%. The conductive additive is carbon nanostructures at 0.1 to 0.5 wt%. Imidazole is used as the catalyst to accelerate the curing of the conductive grade EMC.

### EXAMPLE 2:

The epoxy resin comprises a biphenyl resin and a multifunctional hardener. A silica/alumina filler is used to 88 wt%. The conductive additive is graphene nanoplatelets at 0.5 to 3 wt%. Phosphorous is used as the catalyst to accelerate the curing of the conductive grade EMC.

### EXAMPLE 3:

The epoxy resin comprises an ortho cresol novolak resin and a phenol novolac hardener. A silica filler is used to 82 wt%. The conductive additive is carbon black at 2 to 5 wt%. Imidazole is used as the catalyst to accelerate the curing of the conductive grade EMC.

It should be noted that Examples 1-3 provide a few non-limiting examples. Other combinations of hardeners, conductive additives, catalysts, and inorganic based fillers may be mixed with the epoxy resin to form the conductive grade EMC of the present disclosure.

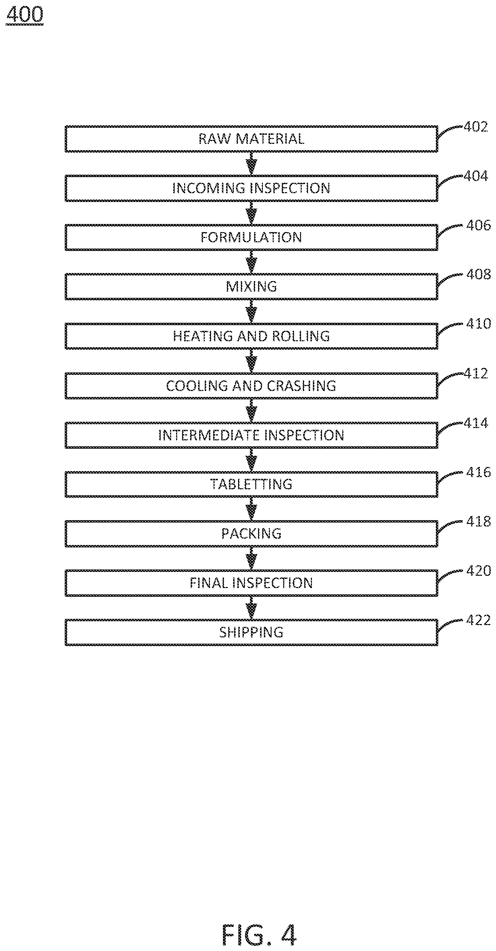

FIG. 4 illustrates a flow diagram of an example method 400 for preparing the conductive grade EMC 116 of the present disclosure. In an example, the method 400 may be performed by various tools and/or equipment controlled by a processor or a controller that oversees operation of the tools and/or equipment.

At block 402, raw materials may be received. The raw materials may include the materials used to formulate the conductive grade EMC 116 described above. For example, the raw materials may include an epoxy resin, conductive additives, inorganic based fillers, hardeners, catalysts, and the like.

At block 404, the raw materials may be inspected. For example, the physical characteristics of the raw materials may be tested. The characteristics may include a purity of the conductive additive, a viscosity of the epoxy resin, micros/nano structures of the conductive additive, electrical properties of the conductive additive, and the like.

At block 406, the conductive grade EMC may be formulated from a mixture of the raw materials. The formulation may include a desired mixture of the epoxy resin, conductive additive, inorganic based filler, hardener, and catalyst. The formulation may include other additives, such as coloring agents, flame retardants, and the like. Example formulations are provided in Examples 1-3 above.

At block 408, the formulation may be mixed. In an example, the formulation may initially be in a liquid phase or form, and the raw materials may be mixed together. Some fabrication processes of the fluidic die may use the conductive grade EMC in a liquid form.

At block 410, the mixed formulation may be heated and rolled. For example, the heating may help to improve dispersion of the conductive additive and other additives evenly throughout the epoxy resin and inorganic based filler. The heated formulation may then be rolled into sheets.

At block 412, cooling and crashing may be applied to the rolled sheets. This may convert the formulated conductive grade EMC into a solid phase. The solid sheets may then be crashed or broken into a powder or granular form. As noted above, some fabrication processes of the fluidic die may use the conductive grade EMC in a powder or granular form.

At block 414, an intermediate inspection may be performed on the powder form of the conductive grade EMC. The intermediate inspection may inspect the average diameter or particle size of the powder and/or other characteristics. The powder form of the conductive grade EMC may then be set aside for storage.

At block 416, the powder form of the conductive grade EMC may be tableted. For example, the powder may be packed together to form a tablet of the conductive grade EMC. As noted above, some fabrication processes of the fluidic die may use the conductive grade EMC in a tablet form.

At block 418, the tablets may be packed. The tablets may be packed in an appropriate shipping container.

At block 420, a final inspection may be performed on the tablets. The final inspection may examine the size and uniformity of the tablets. The final inspection may also examine the tablets for contamination or other undesirable defects.

At block 422, the packaged tablets may be shipped. In another example, the packaged tablets may be stored. In an example, the packaged tablets may be stored or shipped in a container that keeps the temperature below 5 °C.

FIG. 5 illustrates a flow diagram of an example method 500 for fabricating the fluidic die 108 that is over molded with the conductive grade EMC 116 of the present disclosure. In an example, the method 500 may be performed by various tools and/or equipment controlled by a processor or a controller that oversees operation of the tools and/or equipment.

At block 502, the method 500 begins. At block 504, the method 500 prepares a conductive grade epoxy molding compound (EMC). In an example, the conductive grade EMC may be an epoxy resin compound that is mixed with an inorganic based filler, a conductive additive, a catalyst, and a hardener. The hardener may help to cure the epoxy resin. The inorganic based filler may determine some physical properties of the conductive grade EMC, such as modulus, thermal conductivity, and the like. In an example, the inorganic based filler may be greater than 80 wt% of the epoxy resin compound.

In an example, the conductive additive may be a carbon based additive. Examples of carbon based additives may include carbon black, graphite, graphene, nanoplatelets, carbon nanotubes, and carbon nanostructures.

In an example, the hardener may be used to cure the epoxy resin compound. The catalyst may help increase a speed of curing the epoxy resin compound with the hardener.

The conductive grade EMC may be prepared in a variety of different forms based on a type of molding that may be applied to fabricate the fluidic die. For example, the conductive grade EMC may be prepared as a liquid or granular form for compression molding or as a powder or tablet for transfer/slot molding.

At block 506, the method 500 molds the conductive grade epoxy molding compound on a substrate populated by preplaced silicon slivers to form fluidic dies comprising silicon slivers overmolded with the conductive grade epoxy molding compound. The substrate may be wafers up to 305 millimetres (12 inches) or panels up to 300 millimeters (mm) by 300 mm. The silicon slivers may include openings that form the nozzles to eject a printing fluid. The silicon slivers may also include bond pads for electrical connections to control components within the fluidic die (e.g., the TIJ resistors that control ejection of the printing fluid through the nozzles of the silicon slivers).

The conductive grade EMC may be dispensed on the silicon substrate in locations between the silicon slivers. The conductive grade EMC may be molded to form trenches or openings where the printing fluid may flow from a reservoir of a fluidic ejection device towards the silicon slivers to be ejected via the nozzles.

In an example, the conductive grade EMC may be molded using a compression molding process or a transfer/slot molding process. The compression molding process may use the conductive grade EMC in a liquid, a granular, or powder form. The conductive grade EMC may be dispensed onto desired locations of the substrate. A vacuum mold may be applied to the dispensed EMC with heat and down pressure to form the trenches and/or shape the dispensed EMC, as shown in the cross-sectional view of the fluidic die 108 in FIG. 3.

The transfer/slot molding process may use the conductive grade EMC in a tablet form. A mold insert may be applied to the substrate populated with silicon dies in the desired pattern. The mold insert may define the shape of the conductive grade EMC. The tablets of the conductive grade EMC can be melted and dispensed to fill the openings between the substrate and the mold insert.

At block 508, the method 500 the cures the conductive grade epoxy molding compound to form an overmolded panel. For example, a carrier or tape may be debonded from the molded panel. After debonding, the conductive grade EMC can be cured by heat to solidify or harden the conductive grade EMC.

In an example, two cure processes may be carried out to cure the conductive grade epoxy molding compound. A first cure process may occur right after the injection stage of the conductive grade EMC. The cure may occur for a relatively short amount of time (e.g., 60-180 seconds (s)) to make sure the conductive grade EMC can be released from the mold cavity.

Then a second/final cure may occur after the carrier or tape is debonded. This cure may occur for 5-30 minutes (min) at elevated temperatures (e.g., approximately 150 to 200 °C). The final cure process may also include a warpage control process with a mechanical fixture applied to the overmolded formed fluidic dies with overmolded conductive grade EMC.

At block 510, the method 500 cuts the overmolded panel into individual fluidic dies. For example, the fluidic dies overmolded with the conductive grade EMC may be cut into a smaller form factor with multiple fluidic dies or cut into a singulated form with individual fluidic dies. The fluidic dies may then be then inserted into a printhead or integrated headland unit. The printhead may then be inserted into a body of a fluidic ejection device. At block 512, the method 500 ends.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A fluid ejection device (100), comprising:
a reservoir body (102) to store a printing fluid; and
a printhead coupled to the reservoir body (102), wherein the printhead comprises:
an electrical pad; and
a fluidic die (108) electrically connected to the electrical pad,
wherein the fluidic die (108) comprises silicon slivers (110) encapsulated with an epoxy molding compound (116);
**characterised in that** the epoxy molding compound is a conductive grade epoxy molding compound.

2. The fluid ejection device (100) of claim 1, wherein the conductive grade epoxy molding compound (116) comprises a mixture of an epoxy resin with a hardener, an inorganic based filler, a catalyst, and a conductive additive.

3. The fluid ejection device (100) of claim 2, wherein the conductive additive comprises at least one of: carbon black, graphite, graphene, carbon nanotubes, carbon nanofibers, carbon spheres, or carbon nanostructures.

4. A method, comprising:
preparing a conductive grade epoxy molding compound (116);
molding the conductive grade epoxy molding compound (116) on a substrate populated by preplaced silicon slivers (110) to form fluidic dies (108) comprising the silicon slivers (110) overmolded with the conductive grade epoxy molding compound (116);
curing the conductive grade epoxy molding compound (116) to form an overmolded panel; and
cutting the overmolded panel into individual fluidic dies (108).

5. The method of claim 4, wherein the molding comprises a compression molding or a transfer molding.

6. The method of claim 5, wherein the conductive grade epoxy molding compound (116) is prepared as a liquid form, a granular form, or a powder form for the compression molding.

7. The method of claim 5, wherein the conductive grade epoxy molding compound (116) is prepared as a tablet for the transfer molding.

## Patentansprüche

1. Fluidausstoßvorrichtung (100), die umfasst:
einen Reservoirkörper (102) zum Speichern eines Druckfluids; und
einen Druckkopf, der mit dem Reservoirkörper (102) gekoppelt ist, wobei der Druckkopf umfasst:
ein elektrisches Pad; und
eine fluidische Matrize (108), die mit dem elektrischen Pad elektrisch verbunden ist, wobei die fluidische Matrize (108) Siliciumsplitter (110), die mit einer Epoxidformmasse (116) eingekapselt sind, umfasst;
**dadurch gekennzeichnet, dass** die Epoxidformmasse eine Epoxidformmasse von leitfähiger Qualität ist.

2. Fluidausstoßvorrichtung (100) nach Anspruch 1, wobei die leitfähige Epoxidformmasse (116) eine Mischung aus einem Epoxidharz mit einem Härter, einem Füllstoff auf anorganischer Basis, einem Katalysator und einem leitfähigen Additiv umfasst.

3. Fluidausstoßvorrichtung (100) nach Anspruch 2, wobei das leitfähige Additiv mindestens eines umfasst von: Ruß, Graphit, Graphen, Kohlenstoffnanoröhrchen, Kohlenstoffnanofasern, Kohlenstoffkugeln oder Kohlenstoffnanostrukturen.

4. Verfahren, das umfasst:
Herstellen einer Epoxidharzformmasse (116) von leitfähiger Qualität;
Formen der Epoxidharzformmasse (116) von leitfähiger Qualität auf einem Substrat, das mit vorplatzierten Siliciumsplittern (110) zum Bilden fluidischer Matrizen (108) bestückt ist, die die Siliciumsplitter (110), die mit der Epoxidharzformmasse (116) von leitfähiger Qualität überformt sind, umfassen;
Aushärten der Epoxidharzformmasse (116) von leitfähiger Qualität zum Bilden einer überformten Platte; und
Schneiden der überformten Platte in einzelne fluidische Matrizen (108).

5. Verfahren nach Anspruch 4, wobei das Formen ein Formpressen oder ein Spritzpressen umfasst.

6. Verfahren nach Anspruch 5, wobei die Epoxidformmasse (116) von leitfähiger Qualität als eine flüssige Form, eine körnige Form oder eine Pulverform für das Formpressen hergestellt wird.

7. Verfahren nach Anspruch 5, wobei die Epoxidformmasse (116) von leitfähiger Qualität als eine Tablette für das Spritzpressen hergestellt wird.

## Revendications

1. Dispositif d'éjection de fluide (100), comprenant :
un corps de réservoir (102) pour stocker du fluide d'impression ; et
une tête d'impression accouplée au corps de réservoir (102), dans lequel la tête d'impression comprend :
une pastille électrique ; et
une puce fluidique (108) connectée électriquement à la pastille électrique, dans lequel la puce fluidique (108) comprend des lamelles de silicium (110) encapsulées avec un composé de moulage époxy (1, 6) ;
**caractérisé en ce que** le composé de moulage époxy est un composé de moulage époxy de qualité conductrice.

2. Dispositif d'éjection de fluide (100) selon la revendication 1, dans lequel le composé de moulage époxy de qualité conductrice (116) comprend un mélange d'une résine époxy avec un durcisseur, une charge à base inorganique, un catalyseur et un additif conducteur.

3. Dispositif d'éjection de fluide (100) selon la revendication 2, dans lequel l'additif conducteur comprend au moins l'un parmi : noir de carbone, graphite, graphène, nanotubes de carbone, nanofibres de carbone, sphères de carbone ou nanostructures de carbone.

4. Procédé, comprenant :
la préparation d'un composé de moulage époxy de qualité conductrice (116) ;
le moulage du composé de moulage époxy de qualité conductrice (116) sur un substrat pourvu de lamelles de silicium préplacées (110) pour former des puces fluidiques (108) comprenant les lamelles de silicium (110) surmoulées avec le composé de moulage époxy de qualité conductrice (116) ;
le durcissement du composé de moulage époxy de qualité conductrice (116) pour former un panneau surmoulé ; et
la découpe du panneau surmoulé en puces fluidiques (108) individuelles.

5. Procédé selon la revendication 4, dans lequel le moulage comprend un moulage par compression ou un moulage par transfert.

6. Procédé selon la revendication 5, dans lequel le composé de moulage époxy de qualité conductrice (116) est préparé sous une forme liquide, une forme granulaire ou une forme en poudre pour le moulage par compression.

7. Procédé selon la revendication 5, dans lequel le composé de moulage époxy de qualité conductrice (116) est préparé sous forme de pastille pour le moulage par transfert.
